# EUROPEAN PATENT SPECIFICATION

(11) **EP 0 408 737 B1**
(45) Date of publication and mention of the grant of the patent: **20.09.1995**
(21) Application number: 90903498.5
(22) Date of filing: 02.02.1990
(51) Int. Cl.: B01D 53/22

(54) **MEMBRANE SEPARATION DEVICE AND METHOD OF MANUFACTURE**
MEMBRANTRENNVORRICHTUNG UND VERFAHREN ZUR HERSTELLUNG
DISPOSITIF DE SEPARATION PAR DES MEMBRANES ET PROCEDE DE FABRICATION

(30) Priority: 09.02.1989 US 309756; 30.10.1989 US 429928; 14.12.1989 US 450933
(43) Date of publication of application: 23.01.1991
(73) Proprietor: THE DOW CHEMICAL COMPANY, Midland, Michigan 48640 (US)
(72) Inventor: KRUEGER, Robert, T., Martinez, CA 94553 (US); CASKEY, Terrence, L., Concord, CA 94521 (US); TRIMMER, Johnny, L., Antioch, CA 94509 (US); JORGENSEN, Janine, L., Clayton, CA 94517 (US)
(74) Representative: Casalonga, Axel
(86) International application number: US9000715
(87) International publication number: WO9009224

(56) References cited:
- DE-A- 2 259 949
- FR-A- 2 366 860
- US-A- 3 422 008
- US-A- 3 832 830
- US-A- 4 031 012
- US-A- 4 269 712
- US-A- 4 283 284
- US-A- 4 323 454
- US-A- 4 329 229
- US-A- 4 341 005
- US-A- 4 389 363
- US-A- 4 666 543
- US-A- 4 686 039
- US-A- 4 689 149

## Description

The present invention relates to a membrane separation device and method of manufacturing said device. The membrane separation device comprises a housing or case within which is fixedly situated a membrane separation module fabricated from a plurality of semi-permeable hollow fiber membranes.

Separatory devices containing a hollow fiber membrane separation module useful for dialysis, microfiltration, ultrafiltration, reverse osmosis, blood oxygenation, gas separation, pervaporation, membrane stripping, and the like, are well known. Various methods of manufacture have been described. In general, however, the hollow fiber separation module consists of a plurality of fine hollow fibers whose end portions are potted in one or two active tubesheet(s) and whose open-fiber ends terminate in one or two active tubesheet face(s) which provides an access for fluid to enter or exit the interior of the hollow fibers, thereby forming a module comprising a bundle of hollow fibers and one or two tubesheets. The hollow fiber module is sealed in a housing or case in such a manner that two regions are defined by fluid flow which is controlled by the separatory or permeation properties of the hollow fiber membranes. The two regions are generally designated as the shellside and the tubeside. The shellside region is that region exterior to the hollow fibers which is between the tubesheets, while the tubeside region is that region in the interior of the hollow fibers. Each region may have fluid flowing through it, of higher or lower pressure than the other, depending on whether the feed fluid into the device is on the exterior or the interior of the hollow fibers. The driving force for transport through or across the hollow fibers may be due to a difference in pressure, concentration, and/or electrical potential.

The hollow fiber separation module may have one or two active tubesheets; in the former case the hollow fibers are doubled back so that all the ends of the hollow fibers terminate together in the one active tubesheet. A hollow fiber separation module possessing one such active tubesheet in which all hollow fiber ends terminate may also possess a non-active tubesheet to facilitate formation of the hollow fiber bundle and sealing the hollow fiber bundle within the housing or case. A non-active tubesheet does not contain the terminal ends of the hollow fibers. That is, fluid can not be introduced into or withdrawn from such a non-active tubesheet. The tubesheet(s) binds the hollow fibers together and holds them in place. Each tubesheet is also sealed to the inner wall surfaces of the housing or case, thus fixing the separatory module in place within the case. The tubesheet(s) together with the case define the shellside region external to the hollow fibers which does not communicate directly with the interior lumens of the hollow fibers.

Patents representative of the art of hollow fiber membrane separation devices include U.S.-A-2,972,349; US-A-3,328,876; US-A-3,228,877; US-A-3,422,008; US-A-3,423,491; US-A-3,339,341.

The prior art has disclosed the use of a number of resins to form the tubesheets. Typical of such resins are polyurethanes, polyolefins, wax-extended polyolefins, polyolefin copolymers, polyamides, polystyrene, polyvinyl chloride, silicone rubbers, epoxy resins, and the like.

A problem which has occurred in connection with the production of separation devices utilizing hollow fiber membrane separation modules is that there has been no inexpensive and convenient process for sealing the tubesheet(s) to the inner wall surfaces of the surrounding case which is suitable for large scale production. Because of heat, pressure, and other stress factors, the sealing means between the tubesheet(s) and the inner wall surfaces of the case may loosen or develop cracks, permitting intermingling of the fluids in the two aforementioned regions. This intermingling of fluids is unacceptable, as the efficient operation of such membrane separation devices requires that the fluids be substantially maintained in the aforementioned separate regions.

U.S.-A-4,269,712 discloses a hollow fiber medical separatory device which incorporates a pressure-type mechanical seal between the inner end surface of the disc portion of the tubesheet and a radially and axially inwardly extending tapering inner wall surface of the surrounding jacket of the device.

Sealing problems between the tubesheet(s) and container were overcome in U.S.-A-4,269,712 by providing a radially inwardly extending tapered section on the inner wall of the jacket or shell of the separatory unit, with the seal resulting from pressure urging the peripheral tubesheet wall axially inwardly to effect a liquid and gas-tight sealing of the tubesheet against a tapered shell, or jacket surface. The structure shown, however, is complex, and would be uneconomical to manufacture.

U.S.-A-4,414,110 discloses a hollow fiber medical separatory unit wherein the tubesheets at each end of the fibers have the shape of a frustum of a cone and are sized such that the fibers fill the cone to the peripheral edge at the outer end planar surface of the frustum. This device is also a complex one which would be difficult to manufacture economically.

U.S. Patent 4,512,892 relates to an improved method and structure for sealing the ends of a tubular filter element wherein the method comprises providing a strip of non-porous film along the edge of a sheet of microporous filter material, the strip being joined to the filter material fluid-tight at its outer portion but forming a free-flap on its inner portion, forming the element with the strip at one end and over the upstream side of the filtered material, embedding the end in liquid sealer to a depth terminating over the flap portion of the strip, and solidifying the sealer. It is further stated that the free edges of a rectangular pleated membrane may be sealed to opposite walls of a containing support, the ends then being sealed as described.

FR-A- 2 366 860 discloses a hollow fiber membrane separation device in which the tubesheets are sealed to the inner walls of a case by means of a glue. The glue is introduced through two separate small openings.

DE-A- 2 259 949 discloses a hollow fiber separation device wherein a potted bundle of hollow fibers is put in a case and a frame is slided over one end of the bundle. This frame is flanged on the case wall. In the clearance between the potted end of the bundle and the case inner wall an inlay is put and thereafter a grouting is poured into the clearance.

US-A- 4 283 284 describes a hollow fiber dialyser end seal system. Sealant material is applied through port means in the end closure to form a sealant ring about an exterior of a sealing ring. It is said that, since the sealant ring may be relatively uncompressed since it is formed *in situ*, the quality of its seal does not significantly deteriorate by cold flow upon storage.
The sealant may be inserted by spinning the dialyzer while simultaneously inserting a potting compound through the ports until a so-called inner sleeve is filled to the desired level.
Thereafter the potting compound is allowed to cure.

Finally, US-A- 3 422 008 discloses a hollow fiber permeability separatory apparatus using O-rings as seals.

All of the above means of sealing tubesheets to the inner wall surfaces of enclosing cases or containers have been found deficient in one aspect or another.

It would be an improvement in the art to provide a hollow fiber membrane separation device having simplified means for sealing the tubesheets and membrane module within the surrounding case.

In particular, it would be an improvement to provide an efficient, convenient, and economical process for sealing the membrane module with such associated tubesheets within a surrounding case which would substantially eliminate the possibility of breakage or loosening of the seal between the tubesheets and the case.

The invention relates to a process for sealing a hollow fiber membrane separation module into a case in which the hollow fiber membrane separation module comprises a plurality of hollow fibers arranged in a bundle surrounding a core and having tubesheets surrounding each end of the bundle which bind the hollow fibers together, the process comprising:
A. positioning the hollow fiber separation module within a case, while the case is in a substantially vertical position;
B. introducing a resin through an opening at the bottom into the first end of the case in an amount sufficient to fill the region adjacent said case between the interior of the case and the first tubesheet while retaining a space or cavity overlying the open ends of said hollow fibers at said first tubesheet;
C. curing the resin;
D. reversing the position of the case;
E. introducing a resin through an opening into the second end of the case in an amount sufficient to fill the region adjacent said end between the interior of the case and second tubesheet while retaining a space or cavity overlying the open ends of said hollow fibers at said second tubesheet;
F. curing the resin; and
G. providing openings again at each end of the case through the cured resin, penetrating to the spaces overlying the ends of the hollow fibers, thereby providing flow paths for introducing or withdrawing fluids through said hollow fiber membrane separation modules.

The process of the invention provides a convenient, effective, and economical process for sealing a hollow fiber membrane separation module within a case. Such a process is suitable for large scale production of such devices. The invention includes a fluid separation device prepared by the process of the invention, said device, comprising:
A. a plurality of hollow fiber membranes, arranged in a bundle and adapted for the separation of one or more fluids from a fluid feed mixture:
B. a first tubesheet formed of a thermoset or thermoplastic polymeric material at the first end of the bundle, said hollow fiber membranes embedded in the first tubesheet, communicating through said tubesheet and open on the opposite face of said tubesheet;
C. a second tubesheet formed of a thermoset or thermoplastic polymeric material at the second end of the bundle opposite the first end, said hollow fiber membranes embedded in the second tubesheet, communicating through said second tubesheet, and open on the opposite face of said tubesheet;
D. a core, about which is formed the hollow fiber membrane bundle, further arranged such that the core extends through and is bonded to the first tubesheet and the second tubesheet;
E. a tubesheet support cylinder which encircles the bundle wherein a first end is bonded to or embedded in the first tubesheet, and a second end is bonded to or embedded in the second tubesheet;
F. a feed inlet for introducing a feed mixture of fluids to be separated into the bores of the hollow fiber membranes by contacting the feed mixture with the hollow fiber membranes at the opposite face of the first tubesheet;
G. a feed inlet space or region adjacent to the opposite face of the first tubesheet arranged to form a cavity into which the feed inlet means introduces the feed mixture, wherein the region is sealed such that fluid can only enter or leave the region through the feed inlet region or the hollow fibers and the feed inlet is arranged to introduce the feed fluid mixture into the bores of the hollow fiber membranes:
H. a non-permeate outlet for removing the fluids which do not permeate through the hollow fiber membranes from the bore of the hollow fiber membranes at the opposite face of the second tubesheet;
I. a non-permeate outlet space or region adjacent to the opposite face of the second tubesheet arranged to form a cavity into which the hollow fiber membranes introduce fluids which do not permeate the membrane, and from which the non-permeate outlet removes the non-permeating fluids from the module, wherein the non-permeate outlet region is sealed such that fluid can only enter or leave the region through the hollow fiber membranes or the non-permeate outlet means:
J. a casing arranged to encase the entire hollow fiber membrane bundle and the two tubesheets;
K. an opening in the casing and tubesheet support cylinder for removing the fluids which permeate through the hollow fiber membranes from the vicinity of the hollow fiber membranes;
L. seals, between the first tubesheet and the casing and between the second tubesheet and the casing, such that fluid cannot communicate between the feed inlet or outlet regions and the region between the two tubesheets which is outside of the hollow fibers;
M. a first end cap for sealing the end of the casing near the first tubesheet, thereby enclosing the feed inlet space or region, said end cap being physically fixed to said casing;
N. a second end cap for sealing the end of the casing near the second tubesheet thereby enclosing the non-permeate outlet space or region, said end cap being physically fixed to said casing.

The device is characterized in that
(a) the seals, (mentioned under L.) are resin seals;
(b) feed inlet opening and non-permeate outlet opening are going through the resin seals and obtained by reboring said openings to a depth penetrating into the cavity regions.

In a further embodiment of the invention the above device comprises means for channeling flow of permeate in the longitudinal direction parallel to the core toward the permeate outlet, wherein said means have one end embedded in the second tubesheet and the second end terminated at a short distance from the first tubesheet to allow the permeate to flow to the permeate outlet means.

Said means for channeling flow may comprise:
an exterior baffle that encircles the exterior of the hollow fiber bundle, wherein the first end of said baffle is attached to or embedded in the second tubesheet
and the opposite end of said baffle is located at a distance from the first tubesheet
that is sufficient to permit withdrawal of the permeate fluid; and
at least one interior baffle in the interior of the hollow fiber bundle, wherein the first end of said interior baffle is located near the first tubesheet , at a distance therefrom that is sufficient to allow withdrawal of the permeate fluid from said module and the second end of said baffle is fixed to said second tubesheet.

The above device may include a perforated core for introducing a sweep fluid into the permeate side of said hollow fiber membranes.In one embodiment said core is perforated only near the second tubesheet, whereby flow of sweep fluid and permeate is parallel to said core, countercurrent to flow of bore-side fluid.

Figure 1 is a side view of a hollow fiber membrane separation module forming a part of the membrane separation device of this invention.

Figure 2 is a side view of another type of hollow fiber membrane separation module forming a part of the membrane separation device of this invention.

Figure 3 is a cut-away view of a hollow fiber membrane separation device of this invention, showing the hollow fiber membrane separation module of Figure 2 positioned within the case therefore.

Figure 4 is a cut-away view of a hollow fiber membrane separation device of this invention, showing the hollow fiber membrane separation module of Figure 2 positioned within the case therefore with attached end capping means.

Figure 5 is a sectional view of a hollow fiber membrane separation device of this invention which contains baffles.

Figures 6A and 7A are enlarged views of one embodiment of two ends of the hollow fiber membrane separation device of this invention shown in Figure 5, showing in detail the means of bonding of the tubesheet to the inner wall surface of the surrounding case.

Figures 6B and 7B are enlarged views of the opposite ends of an alternate embodiment of a hollow fiber membrane separation device of this invention adapted for use with a shellside sweep fluid.

This invention includes a process for sealing within a case a hollow fiber membrane separation module. The invention also includes devices made by the process of the invention that are useful for separating one or more fluids from one or more other fluids in a fluid mixture in which the separation is performed by selectively transporting one or more fluids across a membrane. In this invention, the membranes are in hollow fiber form. The fluid mixture to be separated may be introduced either on the outside of the hollow fiber membranes or down the bores or lumens of the hollow fiber membranes. The bore or lumen as used herein refers to the portion of the fiber which is hollow in the center of such fiber. Such devices are preferably adapted for feeding fluid down the bores of the hollow fiber membranes.

The hollow fiber membrane devices of this invention can be used to separate one or more fluids from one or more other fluids in a fluid mixture wherein the fluids possess different transport rates through or across the membranes. The fluids may be in gas, vapor, or liquid state.

In one preferred embodiment, the hollow fiber membrane devices of this invention are useful in separating one or more gases from one or more other gases in a feed gas mixture. The mixture of gases to be separated preferably comprises at least one of the gases selected from the group consisting of hydrogen, helium, oxygen, nitrogen, carbon monoxide, carbon dioxide, hydrogen sulfide, ammonia, methane, other light hydrocarbons, and the like. Light hydrocarbons as used herein means saturated and unsaturated C₁₋₄ hydrocarbons. Examples of such gases being separated are hydrogen and/or helium from light hydrocarbons, oxygen from nitrogen, nitrogen from methane, carbon monoxide and/or carbon dioxide from light hydrocarbons, and the like.

In another preferred embodiment, the fluids to be separated are liquids. In one preferred embodiment wherein the fluids to be separated are liquids, the material is transported through or across the membrane as a gas or vapor. The material permeating through or across the membrane as a gas or vapor may be removed from the device as a gas or vapor or condensed and removed from the device as a liquid. This separation may be referred to as membrane stripping, membrane distillation, or pervaporation. In membrane stripping, a microporous membrane is used and the material permeating through or across the membrane is removed from the device as a gas or vapor. In membrane distillation, a microporous membrane is used and the material permeating through or across the membrane is condensed and removed from the device as a liquid. In pervaporation, a non-microporous membrane is used and the material permeating through or across the membrane may be removed as a gas or vapor or condensed and removed from the device as a liquid. In these embodiments, volatile compounds, that is, those with relatively higher vapor pressures under the separation conditions, are separated from compounds with relatively lower vapor pressures. Examples of volatile compounds which may be removed from liquid mixtures include C₁₋₁₀ aliphatic and aromatic halogenated hydrocarbons such as dichloromethane (methylene chloride), dibromomethane (methylene bromide), trichloromethane (chloroform), tribromomethane (bromoform), carbon tetrachloride, 1,1-dichloroethane, 1,2-dichloroethane, 1,1,1-trichloroethane, 1,1,2-trichloroethane, trichloroethylene, tetrachloroethylene (perchloroethylene), 1,2-dichloropropane, chlorobenzene, dichlorobenzene, trichlorobenzene, and hexachlorobenzene: C₁₋₁₀ aliphatic and aromatic hydrocarbons such as methane, ethane, propane, butane, hexane, heptane, octane, ethylene, propylene, butylene, benzene, toluene, and xylene; C₁₋₁₀ aliphatic and aromatic alcohols such as methanol, ethanol, propanol, butanol, pentanol, hexanol, and phenol; C₁₋₈ ketones such as acetone, methylethylketone, methylisobutylketone, pentanone, and hexanone; C₁₋₈ ethers such as bis(2-chloroethyl)ether; C₁₋₈ amines such as methylamine, dimethylamine, trimethylamine, ethylamine, diethylamine, triethylamine, ethylenediamine, and aniline; add the like. Less volatile liquids from which the volatile compounds may be removed include water and mixtures of water and organics. In another preferred embodiment, gases entrained or dissolved in a liquid may be removed from such liquids. Examples of such entrained or dissolved gases include oxygen, carbon monoxide, carbon dioxide, sulfur dioxide, hydrogen sulfide, ammonia, and the like.

The hollow fiber membranes are arranged in a bundle which comprises a plurality of the hollow fiber membranes. Such a bundle may take various shapes and possess various fiber wrapping patterns. Bundles of hollow fiber membranes useful in this invention may comprise various shapes and fiber arrangements, including those disclosed in Mahon, U.S.-A-3,228,876 and McLain, U.S.-A-3,422,008. Preferably, the bundle is arranged in an organized, that is, substantially non-random, fashion. In one preferred embodiment, the hollow fiber membrane bundle is arranged in a cylindrical fashion with the ends of the hollow fibers located at each end of the cylindrical bundle. Such a bundle is preferably an elongated bundle with the length being greater than the diameter. Preferably, the hollow fibers in the bundle are arranged in either a parallel wrap fashion or an a bias wrap fashion. In parallel wrapping, the hollow fibers lie substantially parallel to one another with each end of the hollow fibers found at each end of the bundle. In bias wrapping, the hollow fibers are wrapped in a crisscross pattern at a set angle, thus holding the hollow fibers in place in a bundle. In the bias wrap pattern, the ends of the hollow fibers are located at the end of the bundle. Permeable cloth wraps such as DYNEL™, a polyester cloth, may be used to help hold the bundle of hollow fibers together.

The hollow fiber membranes are generally formed from a polymeric material which is capable of separating one or more fluids from one or more other fluids in a fluid mixture. The polymeric materials which may be used to prepare the hollow fiber membranes preferably include olefinic polymers, such as poly-4-methylpentene, polyethylene, and polypropylene; polytetrafluoroethylene; cellulosic esters, cellulose ethers, and regenerated cellulose; polyamides; polyetherketones and polyetheretherketones; polyestercarbonates; polycarbonates, including ring substituted versions of bisphenol based polycarbonates; polystyrenes; polysulfones; polyimides; polyethersulfone; polyesters; and the like. The hollow fiber membranes may be homogeneous, symmetric (isotropic), asymmetric (anisotropic), or composite membranes. The membranes may have a dense discriminating region which separates one or more fluids from one or more other fluids based on differences in solubility and diffusivity of the fluids in the dense region of the membrane. Alternatively, the membranes may be microporous and separate one or more fluids from one or more other fluids based on relative volatilities of the fluids.

Hollow fiber membranes with dense regions are preferred for gas separations. Asymmetric hollow fiber membranes may have the discriminating region either on the outside of the hollow fiber, at the inside (lumen surface) of the hollow fiber, or located somewhere internal to both outside and inside hollow fiber membrane surfaces. In the embodiment where the discriminating region of the hollow fiber membrane is internal to both hollow fiber membrane surfaces, the inside (lumen) surface and the outside surface of the hollow fiber membrane are porous, yet the membrane demonstrates the ability to separate gases. In the embodiment wherein gases are separated, the preferred polymeric materials for membranes include polyestercarbonate, polysulfone, polyethersulfone, polyimide, polyester, and polycarbonate. More preferred polymeric materials for gas separation membranes include polycarbonate and polyestercarbonate. In one preferred embodiment, such membranes are prepared by the process described in U.S.-A-4,772,392.

Microporous membranes are preferred for liquid separations such as membrane stripping and membrane distillation. Such microporous membranes may be symmetric (isotropic) or asymmetric (anisotropic). In the embodiment wherein liquids are separated, preferred polymeric materials for membranes include polyolefins or fluorinated polyolefins, such as polyethylene, polypropylene, poly-4-methylpentene, fluorinated polyethylene, polytetrafluoroethylene, and copolymers and blends thereof, polystyrene, polyetherketone, and polyetheretherketone. The methods for preparing such hollow fiber membranes are well known in the art.

The hollow fibers preferably possess an outside diameter of 50 to 5,000 micrometers, more preferably of 100 to 1,000 micrometers, with a wall thickness of 5 to 500 micrometers, more preferably 10 to 100 micrometers.

About each end of the bundle is a tubesheet. The tubesheet functions to hold the hollow fiber membranes in place and to separate the membrane device into three different fluid regions. Such fluid regions include a first fluid region external to the first tubesheet, which in the preferred embodiment utilizing boreside feed comprises a feed inlet region wherein the mixture of fluids to be separated is introduced into the hollow fiber membranes. The second fluid region is the region between the tubesheets which is external to the hollow fiber membranes, that is, the shellside (outside) of the hollow fiber membranes. The third fluid region is external to the second tubesheet, which in the preferred embodiment utilizing boreside feed comprises the non-permeate outlet region into which the fluid flowing down the bores of the hollow fiber membranes which does not permeate across the membranes flows and from which such fluid is removed.

The tubesheets may be comprised of a thermoset or thermoplastic resinous material. Such resinous material should be capable of forming a fluid tight seal around the hollow fiber membranes. In some embodiments, it is preferable that such resinous material also be capable of bonding to the core and/or case as well as the hollow fiber membranes. The hollow fiber membranes in the bundle communicate through each tubesheet to the face of each tubesheet opposite the bundle. The bores of the hollow fiber membranes are open to a space or cavity region adjacent to each face, thereby allowing communication of fluid from such spaces or cavities into and out of said hollow fiber membranes. The majority of each tubesheet comprises a composite of the hollow fiber membranes embedded in the resinous material. The tubesheets may be any shape which performs the functions hereinbefore described. Preferably, the tubesheets are circular with sufficient cross-sectional area and thickness to provide support for the hollow fiber membranes and to withstand the pressures exerted on the tubesheets during operation. The portion of each tubesheet outside of the bundle may be built up for various purposes depending upon the design of the device. These portions of the tubesheets may comprise solely resin or resin impregnated cloth which is wrapped around the outer portion of each tubesheet.

Examples of such materials useful as resinous materials for tubesheets include artificial and natural rubbers, phenolaldehydes, acrylic resins, polysiloxanes, polyurethanes, fluorocarbons, and epoxy resins.

In the embodiment where the device is used for gas separations, the tubesheets are preferably prepared from epoxy resins. Any epoxy resin which adheres to the hollow fiber membranes and provides stability to a hollow fiber membrane device once cured can be used in this invention. Polyepoxide resins which are desirable for the resin formulations useful in this invention include glycidyl polyethers of polyhydric phenols.

Illustrative of the polyhydric phenols are mononuclear phenols and polynuclear phenols, and included within the former are the phenolaldehyde condensation resins commonly known as novolac resins. Typical mononuclear phenols include resorcinol, catechol, hydroquinone, phloroglucinol and the like. Examples of polynuclear phenols include 2,2 bis(4-hydroxyphenyl)propane(bisphenol A), 4,4'-dihydroxybenzophenone, 1,1-bis(4-hydroxyphenyl)ethane, bis(2-hydroxynaphthyl)methane, 2,2-bis(4-hydroxyphenyl)butane, 4,4'-dihydroxyphenyl phenyl sulfone, and the like.

The preparation of such epoxy resins is well known and is described in a number of patents such as U.S.-A-2,935,488 and in textbooks such as Lee and Neville, Handbook of Epoxy Resins, McGraw-Hill Book Co., 1967.

Preferred epoxy resins are those resins derived from bisphenol A, e.g., diglycidyl ethers of bisphenol A. Such preferred resins generally correspond to the formula: 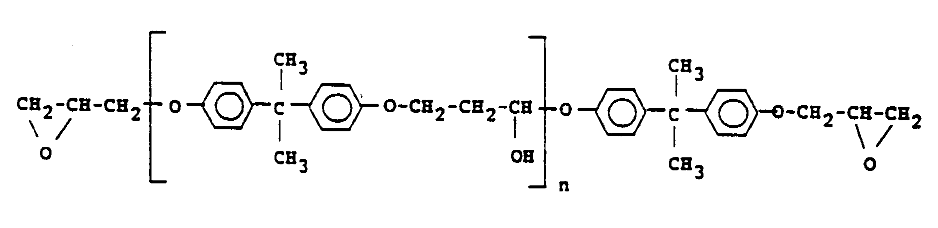
wherein n is a positive real number of between zero and 6, more preferably between zero and 4, even more preferably between zero and 1.5. In the discussion hereinafter, all parts with respect to the resin formulations will be based on 100 parts by weight of the epoxy resin (parts per hundred parts of resin, phr).

Epoxy resins preferred for use in this invention include D.E.R.® epoxy resins, available from The Dow Chemical Company.

The epoxy resin is cured with a curing agent known to those skilled in the art. Preferred curing agents include polyfunctional amines, e.g., aromatic diamines, or mixtures or adducts thereof, and 2,4-dialkylimidazoles Typical amines include m-phenylenediamine, methylenedianiline, mixtures (including adducts) of m-phenylenediamine and methylenedianiline, diaminodiphenylsulfone, 4-chlorophenylene diamine, and the like. Curing agents preferred for use in this invention include Ancamine® amine curing agents, available from Pacific Anchor Chemical Corp.

An optional third component of the tubesheet epoxy resin formulation is an epoxy curing catalyst. Any known epoxy curing catalyst which enhances the curing of a polyglycidyl ether of a polyhydric phenol with the curing agent may be used. Such catalysts are generally used in catalytic amounts, that is, amounts sufficient to enhance the curing of the epoxy resin with the curing agent. Preferably, the catalyst is present in an amount of between 0.5 and 10 parts per hundred of resin, more preferably between 0.5 and 4 parts of catalyst per hundred parts of resin, and most preferably between 1 and 2 parts per hundred parts of resin. Preferred catalysts include tertiary amines, for example, benzyldimethylamine, N,N,N',N'-tetramethylbutanediamine, dimethylaminopropylamine, N-methylmorpholine, N-triethylenediamine, and the like. Generally, where the curing agent is amine based, a catalyst is not necessary.

In the embodiment wherein the device of the invention is used for membrane stripping, membrane distillation, or pervaporation, the tubesheets preferably comprise the epoxy resins hereinbefore described or polyurethanes.

The hollow fiber membrane bundle is arranged about a core. The core is arranged such that it extends through and is bonded to both the first and second tubesheets. The core functions to provide support for the two tubesheets and keeps the tubesheets from collapsing upon one another during operation. The core further functions to support the hollow fiber membrane bundle which is arranged about the core. The core may comprise a rod, a solid tube, or a perforated tube, provided the core possesses sufficient mechanical strength to support the hollow fiber membranes and the tubesheets. The core may possess a non-circular cross-section. In one embodiment where no sweep fluid is used, it is preferred that the core either be a solid tube or a solid rod. In another embodiment where no sweep fluid is used, it is preferred that the core be a hollow tube which may serve to return non-permeate fluid from the third fluid region adjacent to the second tubesheet to the feed end of the module. That is, the non-permeate fluid exiting the hollow fibers in the vicinity of the second tubesheet may be returned to the vicinity of the first tubesheet via the core adapted therefore.

In some embodiments utilizing boreside feed, it is desirable to introduce a sweep fluid into the shellside of the hollow fiber membrane device in order to aid in the removal of permeated fluids from the vicinity of the second fluid region on the outside of the hollow fiber membranes between the two tubesheets. One method of introducing such a sweep fluid is to equip one end of the core with a sweep inlet means, adapted for introducing a sweep fluid into the core. In this embodiment, the core is perforated in the vicinity of the hollow fiber membrane bundle such that the sweep fluid enters the hollow fiber membrane bundle. The core tube is preferably solid where it passes through the first fluid feed inlet region and third fluid non-permeate outlet region. In another preferred embodiment where a sweep fluid is used, the core is perforated at one end of the portion of the core located between the tubesheets. In one such preferred embodiment, such end of the core is adjacent to the second tubesheet, opposite the first fluid feed inlet region, which aids in promoting countercurrent flow.

The core may be made of any material which possesses sufficient mechanical strength to provide the desired support for the bundle and tubesheets. The core may be comprised of a plastic such as PVC, a composite material, or a metal. Preferably, the core is comprised of a metal, for example, aluminum or steel.

The entire membrane module is placed within a case. The case functions to protect the outside of the membrane module from damage and to contain or seal the membrane module from the outside environment. Further, the case is arranged about the tubesheets in such a fashion that a seal is formed between the first tubesheet and the case and the second tubesheet and the case, such that fluid cannot communicate across or through the seal. Thus the membrane device is divided into three distinct non-communicating regions: a first fluid space or region exterior to the first tubesheet, in the embodiment utilizing boreside feed comprising the feed inlet region; a second space or fluid region being the region between the tubesheets which is outside of the hollow fiber membranes; and a third space or fluid region exterior to the second tubesheet, in the embodiment utilizing boreside feed comprising the non-permeate outlet region. The seal is formed by any means which provides a fluid tight seal between each of the tubesheets and the case. In a preferred embodiment, the tubesheets may be bonded directly to the case with an adhesive material which bonds to both the tubesheet and the case. In another preferred embodiment, the case contains a lip or taper, against which a gasket is optionally placed, and against which the outer circumference of the tubesheet face adjacent to the gasket seals under the influence of the hydrostatic pressure applied during operation of the device, the void space between the tubesheet and the case being filled with resin.

The case may comprise any material which is capable of protecting the membrane device from the environment. In the embodiment utilizing boreside feed, the case may, but need not be, a pressure vessel. In those embodiments utilizing boreside feed wherein it is desirable to collect the permeate fluid within the case, the case should be substantially impermeable to the permeate fluid. Preferably, the casing material is a plastic such as polyvinyl chloride (PVC), a composite, or a metal. More preferably, the case material is metal, such as aluminum or steel.

At each end of the case are located end capping means which are arranged for sealing the end of the case near the tubesheet to form spaces or cavity regions adjacent to the opposite faces of the tubesheets which are opened to the hollow fiber membranes. The region adjacent to the outside face of the first tubesheet is the first fluid space or cavity region. The region adjacent to the outside face of the second tubesheet is the third fluid space or cavity region. Such end capping means are attached to the case by an attachment and sealing means such that a seal is formed to prevent fluid communicating between the outside and the first fluid region or the outside and the third fluid region. In a preferred embodiment, the end capping means is an endplate which is attached by an attachment means to the case. Such endplate may be attached by providing a method of bolting the endplate directly onto the case. The case may have arranged about it or bonded to it an attachment means adapted for attaching the end capping means to the end of the case. Each end of the case may have arranged around its outside a flange to which the end capping means may be fastened. In one embodiment, the flange may be formed by building up the tubesheet. In another embodiment, a separate flange may be bonded about the tubesheet, the case, or both the tubesheet and the case. In another embodiment, a slip flange may be placed about the case. In such an embodiment, the tubesheet is built up such that the slip flange is held on the membrane device. The end capping means is affixed to the flange which is held on the device by the built up tubesheet. In another embodiment, the end capping means may be welded or soldered to the case. In another embodiment, one of the end capping means may comprise an integral portion of the case.

The membrane devices of this invention further comprise a feed inlet means. Generally, this is a port, nozzle, fitting, or other opening which allows introduction of the mixture of fluids to be separated into the device. In a boreside feed device, the feed inlet means is located at one end of the device such that the feed may be introduced into the bores of the hollow fiber membranes. Such feed inlet means is located in the vicinity of the opposite (outside) face of the first tubesheet. Preferably, the device is designed such that there is a first fluid space or region or cavity, that is, the feed inlet space or region, which is sealed to prevent fluid communication with the outside of the membrane device or with the region between the tubesheets which is outside the hollow fiber membranes. The inlet feed region is defined by the first tubesheet, the first end capping means, and the case. Such feed inlet region functions as a pressure vessel. The feed inlet means introduces the feed fluid mixture into such region. Such region communicates with one end of the hollow fiber membranes, thus allowing the feed fluid mixture to be separated to flow into and down the bores of the hollow fiber membranes. The feed inlet means may be located in the first end capping means. In a shellside feed device, the feed inlet means is located in the vicinity of the second fluid region external to the hollow fibers between the tubesheets. In such an embodiment, the feed inlet means is preferably located within the case.

The non-permeate outlet means is adapted for removing the fluids which do not permeate through the hollow fiber membranes from the membrane device. In a boreside feed device, the fluids which do not permeate through the membranes exit the bores of the hollow fiber membranes at the end opposite that end to which the feed fluid mixture is introduced. Preferably, the exiting fluids enter a third fluid space or region, that is, the non-permeate outlet region. Such space or region is adjacent to the opposite (outside) face of the second tubesheet and is sealed such that fluid cannot communicate with the outside of the membrane device or with the region between the tubesheets which is outside the hollow fiber membranes. This region is generally a space or cavity defined by the second tubesheet, the case, and the second end capping means. The non-permeate outlet means generally is a port, nozzle, fitting, or other opening which allows removal of the non-permeate from the device. The non-permeate outlet means may be located in the second end capping means. In a shellside feed device, the non-permeate outlet means is located within the vicinity of the second fluid region, preferably within the case.

In a boreside feed device, the permeate outlet means for removing the fluids which permeate through the hollow fiber membranes from the region between the two tubesheets which is outside of the hollow fiber membranes is a port, nozzle, fitting, or other opening adapted for withdrawing the permeate from the shellside of the membrane device. In one embodiment, it is preferable that the permeate outlet means be located near the end of the membrane device to which the feed fluid mixture is introduced. Such location of the permeate outlet means results in countercurrent flow of the feed fluid mixture with relationship to the flow of the permeate fluid, which enhances the concentration gradient along the hollow fiber membranes, thereby improving the recovery and productivity of the membrane device. In a shellside feed device, the permeate outlet means is located in the vicinity of the first fluid region and/or the third fluid region exterior to the first and second tubesheets, respectively. Such permeate outlet means are preferably located in the end capping means.

In the embodiment utilizing boreside feed, the membrane devices of this invention optionally contain means for channeling flow. Such optional means for channeling flow or baffles are arranged to channel flow of permeate in a longitudinal direction parallel to the core towards the permeate outlet means. The optional means for channeling flow thus function to encourage countercurrent flow of the feed fluid mixture to be separated down the bores of the hollow fibers with relation to the flow of the permeate fluid and the sweep fluid, if any.

Such membrane devices of this invention may contain one or more optional means for channeling flow of permeate. Preferably, one means for channeling flow encircles the exterior of the hollow fiber bundle and has its first end attached to, or embedded in, the second tubesheet such that the permeate fluid cannot exit the device near the second tubesheet; the second end of said exterior means for channeling flow is located a distance from the first tubesheet, wherein the distance between the second end of the means for channeling flow and the first tubesheet is sufficient to withdraw the permeate fluid and sweep fluid, if any, through the permeate outlet means wherein such flow occurs near the first tubesheet.

In another embodiment, one optional means of channeling flow may be embedded in both tubesheets. In such an embodiment, some means of allowing the flow of permeate fluid from the outside of the hollow fiber bundle to exit the device via the permeate outlet means is incorporated in the means for channeling flow. Preferably, the means for allowing the flow of fluid to the permeate outlet means in such an embodiment are holes or perforations in the flow channeling means. Such holes or perforations are located near the end embedded in the first tubesheet.

One or more optional means for channeling flow may be located within the interior of the hollow fiber bundle. The first end of such interior means for channeling flow is located near the second tubesheet such that the distance between the second tubesheet and the interior means of channeling flow is sufficient to allow the permeate fluid and sweep fluid, if any, to flow into the flow channels created by the interior means for channeling flow. The second end of such interior means for channeling flow is located near the first tubesheet wherein the distance between the second end and the first tubesheet is sufficient to withdraw the permeate stream and sweep fluid, if any, through the permeate outlet means. Such interior means of channeling flow function to maintain countercurrent flow throughout the device and to control permeate concentration within the device. In the embodiment where no sweep fluid is used, such interior optional means for channeling flow preferably have a first end embedded in the second tubesheet and the second end located at a distance from the first tubesheet, said distance between the end of the interior means for channeling the flow and the first tubesheet being sufficient to withdraw the permeate fluid flowing along the interior means for channeling flow through the permeate outlet means. Such interior optional means for channeling flow functions to force the permeate fluid to flow in a direction countercurrent to the direction that the feed fluid mixture is flowing down the bore of the hollow fiber membranes. Such countercurrent flow results in reducing the concentration of the permeate fluid in the region nearest the second tubesheet, thus maximizing the concentration gradient across a major portion of the length of the membrane device.

In the embodiment wherein a sweep fluid is introduced into the hollow fiber bundle via the core, it is preferable to have at least two means for channeling flow of permeate.

The actual distance between the end of the means for channeling flow and the first tubesheet is not critical, provided sufficient space is provided between the end of the means for channeling flow and the tubesheets to allow the permeating gas to be withdrawn by the permeate outlet means. This results in an improved recovery and productivity for the device utilizing boreside feed.

The means for channeling flow may, in one preferred embodiment, comprise a series of substantially impermeable baffles or wraps. Such baffles are preferably comprised of flexible materials which are substantially impermeable to the fluids being separated. Examples of suitable impermeable baffle materials are MYLAR^{R} polyester film available from ICI and SARAN^{R} polyvinylidene chloride plastic film available from The Dow Chemical Company. Such baffles may be arranged as concentric tubes parallel to the core. Optionally, such baffles may be formed in a spiral fashion beginning at the core and ending near or at the outside of the bundle. The number of baffles which may be present is that number which provides sufficient channeling of the permeate fluid to maintain a substantially countercurrent flow. The number of baffles used will therefore depend upon the bundle diameter, the packing factor of the hollow fiber membranes in the bundle, and the bundle length. In one preferred embodiment, baffles are preferably placed in intervals measured along the bundle diameter from the core of between 1/4 to 2 inches, (0.6 to 5.1 cm) more preferably 3/4 to 1 1/2 inches, (1.9 to 3.8 cm) even more preferably 3/4 to 1 1/4 (1.9 to 3.2 cm). The baffle length should be sufficient to promote countercurrent flow along a major portion of the length of the hollow fiber membranes. The baffles preferably extend along the length of the bundle between the tubesheets between 50 and 95 percent, more preferably between 75 and 95 percent, even more preferably between 80 and 90 percent.

Optionally, the device may contain a separate tubesheet support means comprising a means which functions to support the outer edge of the tubesheets and to prevent or reduce stresses due to bending and compression as a result of pressurizing the outside faces of the tubesheets. The tubesheet support means is preferably a cylinder which surrounds the outer portion of the hollow fiber bundle and is bonded about the tubesheet with a resin. Any resin which adheres the tubesheet to the tubesheet support and has sufficient modulus to maintain the bond under normal operating conditions is useful for forming such a bond. Included in the resins which may be used to form such a bond are the resins which may be used to form the tubesheets. The support means may surround a portion of the tubesheet and be bonded thereto or the support means may be embedded in a tubesheet which is built up around the support means. The tubesheet support means may be made of any material which provides sufficient support to prevent or reduce the compression stresses and bending stresses on the tubesheet and to prevent the tubesheets from collapsing in on one another. Such materials include high strength plastics such as PVC, composites, and metals; metals are preferred. Examples of metals which may be used include aluminum or steel. The tubesheet support means contains one or more ports or openings so as to allow the permeate fluid to leave the membrane device.

Optionally, a material which functions to insulate the membrane device and/or absorb shock may be placed within the case on the outside of the hollow fiber bundle in the region between the two tubesheets. Such a material includes polyurethane foam and tightly packed foam beads. The material generally covers a portion of the outside of the hollow fiber membrane bundle, said portion extending from the second tubesheet along the length of the hollow fiber membrane bundle towards the first tubesheet and ending short of the first tubesheet such that a sufficient opening exists to allow the permeate fluid and sweep fluid, if any, to flow through the opening to the permeate outlet means. In a preferred embodiment, the insulating and/or shock absorbing material also functions as the exterior means for channeling flow.

The hollow fiber membrane bundles of this invention may be constructed using processes well known in the art. Generally, in hollow fiber membrane bundle fabrication, the hollow fiber membranes are formed into a bundle with a suitable shape for device construction. Preferred bundle arrangements include parallel laying down of fibers or bias wrap laying down of fibers. The tubesheets may be formed about the ends of the bundle simultaneously with laying down of the fibers, such as by dripping resin along the fibers as the fibers are laid down. Alternatively, the bundle may be formed and then the tubesheets may be formed about each end of the bundle by centrifugal casting or dunk potting techniques, as well known in the art. In those embodiments where it is desirable to build up the tubesheets to a circumference larger than the circumference of the hollow fiber bundle, the following procedure may be used. Where the tubesheets are formed after the formation of the bundle, the casting or potting technique involves using appropriate molds to form larger circumference tubesheets. In the embodiment where the tubesheet is formed as the fibers are being laid down, once all the fibers have been laid down, the tubesheets may be built up by a variety of methods. One such method is to continue to wrap resin and impregnated cloth around the end of the tubesheets or circumference of the tubesheets and provide further resin so that the tubesheets are built up; thereafter, the resin is cured.

The optional means of channeling flow, that is, preferably the baffles are introduced into the hollow fiber bundle during fabrication of the bundle. If the baffles are placed in spiral or jelly roll configuration, the baffles are placed around the fibers as the fibers are laid down. Alternatively, if the baffles are of a concentric cylinder arrangement, then after a portion of the fibers are laid down, a baffle is placed over the fibers, and further fiber layers are laid down until the next baffle is placed over the fibers; this procedure is continued until the device is completed.

Once the hollow fiber bundle, tubesheets, and baffles have been assembled, then the optional tubesheet support means is placed about the outside of the hollow fiber bundle and either bound to the tubesheet using a resin, or the tubesheet is built up around the end of the tubesheet support means. In one embodiment where the tubesheet support means is bonded to the tubesheet, the following procedure is used. With the tubesheet support means on end, the tubesheets and hollow fiber bundle is inserted into the tubesheet support means, the tubesheet on one end thereof having been previously built up and machined to provide a shoulder against which the tubesheet support means is seated on said end. The tubesheet is then optionally built up around the tubesheet support prior to sealing the module within the case as hereinafter described.

The tubesheets may be potted and placed inside of the tubesheet support means, forming the tubesheet and the bond between the tubesheet and the tubesheet support means in a single step. Once the tubesheet support means is bonded to the tubesheet, then an attachment means is bonded to the tubesheet support means, the tubesheet, or both, which is adapted for attaching the end capping means thereto. In one embodiment, a flange is welded to the tubesheet support means or bonded to the tubesheet via a resin, or both. Thereafter, the end capping means are attached to such a flange. Where necessary, gaskets are placed between the flange about the tubesheet and the end capping means so as to insure a fluid tight seal. Alternatively, slip flanges may be used as described hereinbefore.

To seal the hollow fiber membrane module within the case, the case with protective lower and one end capping means in place is first obtained and is positioned in a substantially vertical position. The hollow fiber membrane separation module which has been prefabricated as hereinbefore described is then positioned within the case and held in a substantially fixed position by suitable means. Thereafter, a resin is injected through an opening at the bottom of the case or lower end cap, into the interior region between the interior wall surface of the case and the exterior surface of the tubesheet, the resin being injected in an amount sufficient to substantially fill the region in the case such that said resin encompasses a substantial portion of the tubesheet, while retaining a space or cavity overlying the open fiber ends of the tubesheet.

The resin is then allowed to cure. Thereafter, the case position is reversed, and the process repeated. That is, that portion of the case which was originally at the top, is now positioned at the bottom, and a resin is injected through an opening at the now bottom of the case or end cap into the interior region between the interior wall surface of the case and the exterior surface of the tubesheet, the resin being injected, in an amount sufficient to substantially fill the region in the case such that said resin encompasses a substantial portion of the tubesheet. Thereafter, the resin is allowed to cure.

After the resin at both ends of the device has cured, an opening is made such as by drilling through at least one of the openings through which the resin was originally injected, so that communication may be obtained from the exterior of the case to the interior spaces or regions overlying the faces of the hollow fibers through which fluid may be introduced or withdrawn.

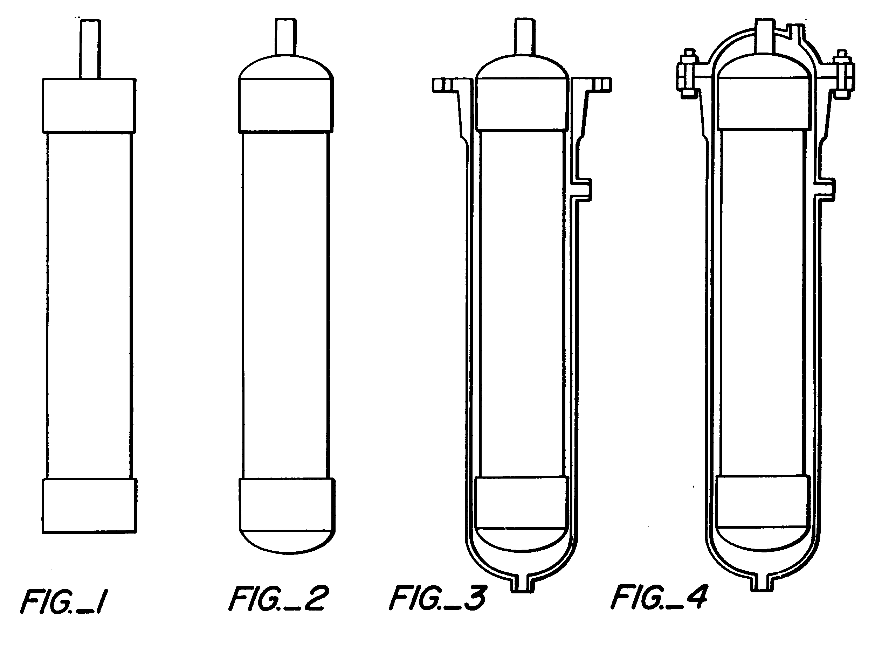

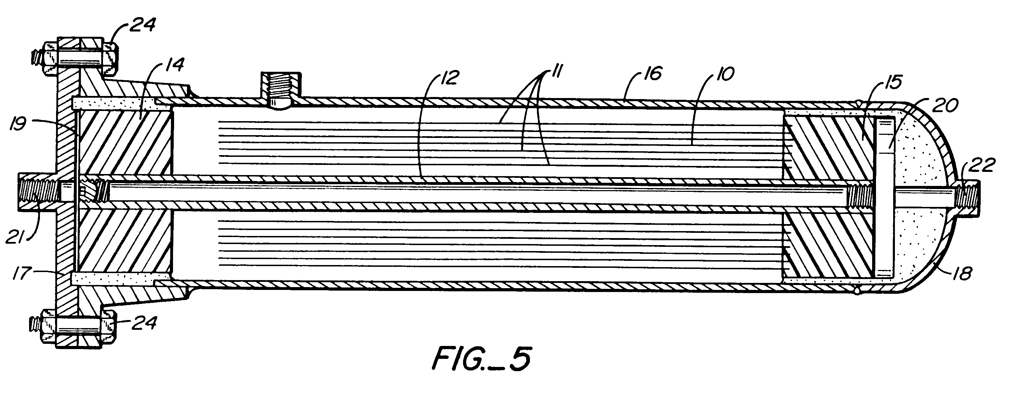

The process of the invention is further illustrated by reference to Figures 1-7; the hollow fibers are not shown for simplicity. Referring to Figure 5, the hollow fiber bundle 10 containing optional baffles 11 is formed with tubesheets 14 and 15 about a plugged core 12, thus comprising a hollow fiber membrane module. The hollow fiber membrane module includes protective tubesheet caps that define and protect the space or cavity regions 19, 20 overlying the open ends of the hollow fibers. The numerals "19" and "20" are used in the Figures to denote either the protective tubesheet cap or the space or cavity defined thereby adjacent the first or second tubesheets, respectively.
The module is inserted vertically into case 16 containing an integral end cap 18 in which is located an opening 22, such that the end of the hollow fiber bundle comprising tubesheet 15 and protective tubesheet cap 18 overlying the space 20 are located at the bottom of the vertically situated case 16. Resin is injected into the region formed between the interior surface of the case 16 and the exterior surfaces of the protective tubesheet cap 20 and tubesheet 15. After the resin cures, the position of the case 16 is reversed, and the procedure may be repeated. End cap 17 is attached in place via bolts 24 over protective tubesheet cap 19. End cap 17 contains an opening 21 into which resin is injected. Openings 21 and 22, filled with resin, are drilled through and into protective tubesheet caps 19 and 20 to permit fluid to be introduced or withdrawn therethrough.

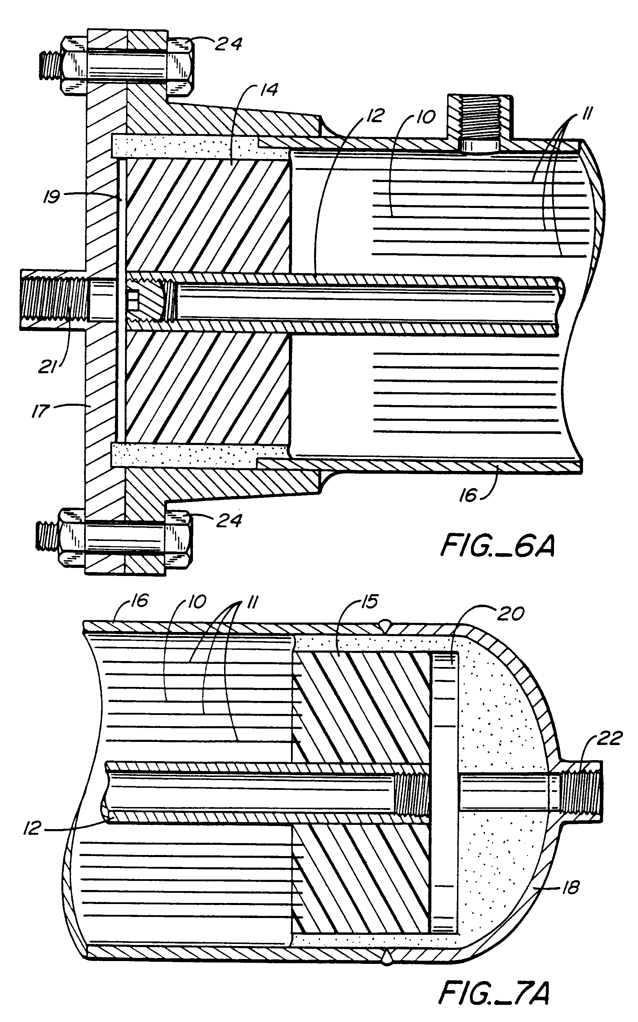

Figures 6A and 7A are enlarged views of the ends of the device of Figure 5 illustrating the sealing means of Figure 5.

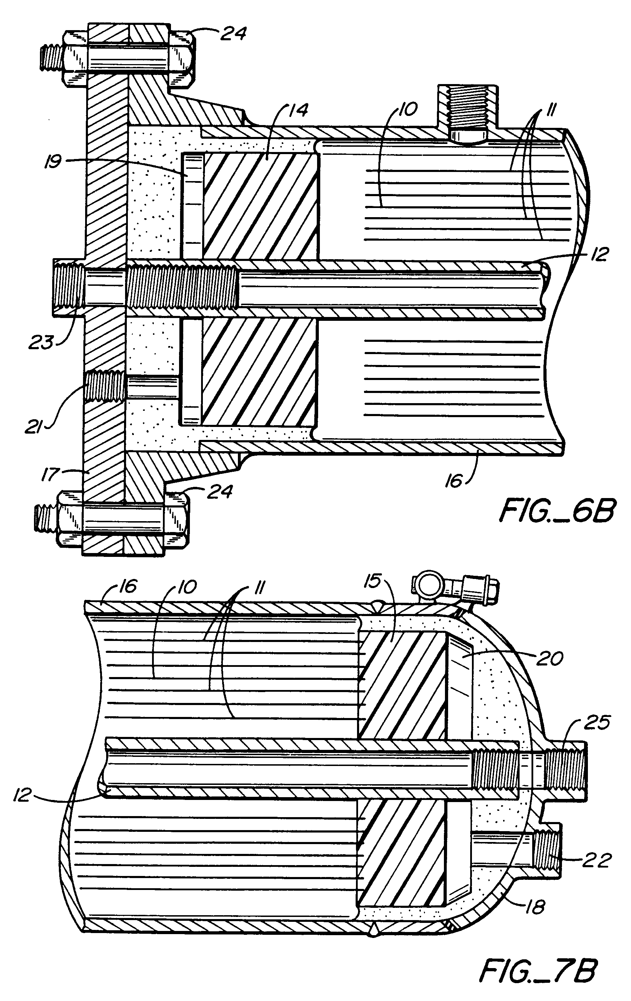

Figures 6B and 7B are enlarged views of the ends of a membrane device of this invention adapted for a shellside sweep fluid and possessing alternate sealing means. As noted in the discussion above with respect to flowing a sweep fluid on the exterior of the hollow fibers, the core 12 may be perforated (such perforations are not shown in the Figures). The sweep fluid may be introduced through the core 12 by means of openings 23, 25 at either or both ends, with the mixture of permeate and sweep fluid being withdrawn from the fitting on the casing (16) near the first tubesheet (14). Other flow arrangements, as desired, may be employed.

The process of this invention enables a membrane separation unit assembly to be constructed in which the membrane module is bonded to the interior wall surface of the case within which it is positioned, thereby providing a fluid-tight seal between those regions through which the fluid passes, without the possibility of intermingling of fluid between the regions.

The feed fluid may be introduced on the tubeside or shellside of the hollow fiber membrane separation device. Preferably, the feed fluid is introduced down the bores of the hollow fibers. The device unit may be operated under a variety of shellside flow configurations including co-current flow, counter-current flow, and radial flow.

In the embodiment utilizing boreside feed wherein a sweep fluid is used, the sweep fluid may be any fluid which aids in the removal of the permeate fluid from the shellside of the membrane device. The sweep fluid may be a liquid, vapor, or gas. In a gas separation or membrane stripping separation, the sweep fluid is preferably a gas. Preferred sweep gases include air, nitrogen, and the like.

The operating temperature and pressure of the device is dependent upon the type of membrane used and the membrane separation method employed. The operating temperature should be below the temperature at which the membrane integrity is adversely affected, that is, below the softening or melting point of the polymer from which the membranes are fabricated. The operating temperature preferably is less than 95°C, more preferably less than 60°C. Operating at ambient temperatures is often convenient. The operating pressure should be sufficient to pump the fluid to be treated, yet below the burst or collapse pressure of the hollow fibers, depending upon the feed mode utilized. The burst and collapse pressures are dependent on the membrane material and the fiber size. Preferably, the operating pressure is less than 2,000 psig (13,891 kPa absolute) in the case of shellside feed and preferably less than 100 psig (791 kPa absolute) in the case of boreside feed.

This invention can be more fully understood by reference to the following Example, which is intended to be illustrative of the invention, and not limiting thereof.

### Example 1

A hollow fiber membrane separation module is constructed comprising a tubular central core, surrounded by a plurality of semi-permeable hollow fibers, extruded from tetrabromobisphenol A polycarbonate in accordance with the method described in U.S.-A-4,772,392. The fibers are arranged in parallel to the central core, thus forming an elongated cylindrical device. Each end of the device is potted in an epoxy resin, to provide tubesheets which hold the hollow fibers in place. A protective tubesheet cap is positioned over the open face of each of the tubesheets at each end of the module, and the module is inserted into a tubular case which is closed at one end by an end cap. The tubular case has one port on the side thereof through which fluid may be introduced or withdrawn, and an opening at each end communicating with the space or region formed by the protective caps over the respective ends of the hollow fiber membrane separation device.

The case is then placed in a substantially vertical position, and resin is introduced through the opening in the bottom of the case, in an amount sufficient to fill the region between the external surface of the tubesheet and the inner wall of the case up to a level approximately equal to the inwardly directed face of the tubesheet. The resin is then allowed to cure.

Thereafter, the case is reversed, positioning that portion which was originally at the bottom now at the top, and repositioning that portion which originally formed the top, now at the bottom.

Thereafter, resin is introduced through the opening now positioned at the bottom of the case in an amount sufficient to fill in the available space between the external surface of the tubesheet, and the inner wall of the case within which the membrane module is positioned, up to a level equivalent with the level of the inwardly directed face of the tubesheet. The resin is then allowed to cure.

Thereafter, the openings at each end of the membrane device through which the resin is introduced, and which now contain cured resin, are rebored to a depth whereby the protective cap overlying the open faces of the hollow fibers and the outwardly directed face of the tubesheets at each end is penetrated.

Thus, means is provided for introducing or withdrawing fluids through said respective rebored openings to that area provided by the protective covers over the faces of the tubesheets. This enables gases or liquids to be introduced into or withdrawn from the hollow fiber membranes.

## Claims

1. A process for sealing a hollow fiber membrane separation module into a case (16) in which the hollow fiber membrane separation module comprises a plurality of hollow fibers arranged in a bundle (10) surrounding a core (12) and having tubesheets (14, 15) surrounding each end of the bundle which bind the hollow fibers together, the process being characterised by the steps:
A. positioning the hollow fiber separation module within a case (16), while the case is in a substantially vertical position;
B. introducing a resin through an opening (21) at the bottom into the first end of the case in an amount sufficient to substantially fill the region adjacent said end between the interior of the case (16) and first tubesheet (14) while retaining a space or cavity (19) overlying the open ends of said hollow fibers at said first tubesheet (14);
C. curing the resin;
D. reversing the position of the case;
E. introducing a resin through an opening (22) into the second end of the case (16) in an amount sufficient to fill the region adjacent said end between the interior of the case and Second tubesheet (15) while retaining a space or cavity (20) overlying the open ends of said hollow fibers at said second tubesheet (15);
F. curing the resin; and
G. providing openings (21, 22) again at each end of the case (16) through the cured resin, penetrating to the spaces (19, 20) overlying the ends of the hollow fibers, thereby providing flow paths for introducing and/or withdrawing fluids through said hollow fiber membrane separation module.

2. The process of Claim 1 wherein the hollow fiber separation module, comprises:
A. a plurality of hollow fiber membranes, arranged in a bundle (10) and are adapted for the separation of one or more fluids from a fluid feed mixture;
B. a first tubesheet (14) formed of a thermoset or thermoplastic polymeric material located at a first end of the bundle (10), said hollow fiber membranes embedded in the first tubesheet, communicating through the first tubesheet, and open on the opposite face of the first tubesheet;
C. a second tubesheet (15) formed of a thermoset or thermoplastic polymeric material located at the second end of the bundle (10), opposite the first end of the bundle, said hollow fiber membranes embedded in the second tubesheet, communicating through the second tubesheet, and open on the opposite face of the second tubesheet;
D. a core (12) about which the hollow fiber membrane bundle is formed, further arranged such that the core (12) extends through and is bonded to the first tubesheet (14) and the second tubesheet (15); and
E. means (11) for channeling flow of fluid that permeates through the hollow fiber membranes to the region between the two tubesheets and is outside of the hollow fiber membranes, said means channeling said flow longitudinally parallel to the core, said channeling means having one end embedded in or attached to the second tubesheet (15) and the opposite end located at a distance from the first tubesheet (14) sufficient to withdraw said fluid from said module.

3. The process of Claim 2 wherein said core (12) is perforated for introducing a sweep fluid into the portion of the module between the first and second tubesheets that is outside of the hollow fiber membranes.

4. The process of Claim 2 or 3 wherein the means for channeling flow, comprises:
an exterior baffle (11) that encircles the exterior of the hollow fiber bundle (10), wherein the first end of said baffle (11) is attached to or embedded in the second tubesheet (15) and the opposite end of said baffle is located at a distance from the first tubesheet (14) that is sufficient to permit withdrawal of the permeate fluid; and
at least one interior baffle (11) in the interior of the hollow fiber bundle, wherein the first end of said interior baffle is located near the first tubesheet (14), at a distance therefrom that is sufficient to allow withdrawal of the permeate fluid from said module and the second end of said baffle is fixed to said second tubesheet (15).

5. The process of Claim 1 wherein the hollow fiber membranes have a dense discriminating region which separates one or more fluids from one or more other fluids.

6. The process of any one of Claims 1-5 wherein the hollow fiber membranes comprise at least one of polysulfone, polyethersulfone, polyimide, polyestercarbonate, or polycarbonate.

7. The process of Claim 1 wherein the membranes are microporous and comprise at least one polyolefin, fluorinated polyolefin, polystyrene, polyetherketone or polyetheretherketone.

8. The process of Claim 7 wherein said polyolefin is polyethylene, polypropylene or poly-4-methylpentene.

9. The process of Claim 2 wherein the means for channeling flows comprise impermeable baffles that extend 50 to 95 percent of the bundle length between the two tubesheets.

10. The process of Claim 1 wherein the hollow fiber membrane bundle is bias wrapped or parallel wrapped.

11. The process of Claim 1 wherein said resin for filling regions between casing and tubesheets comprises an epoxy resin or a polyurethane resin.

12. The process of Claim 2 wherein the core (12) is adapted to return fluid which does not permeate through the hollow fiber membranes in the vicinity of the second tubesheet to the vicinity of the first tubesheet.

13. A fluid separation device, comprising:
A. a plurality of hollow fiber membranes, arranged in a bundle (10) and adapted for the separation of one or more fluids from a fluid feed mixture;
B. a first tubesheet (14) formed of a thermoset or thermoplastic polymeric material at the first end of the bundle, said hollow fiber membranes embedded in the first tubesheet, communicating through said tubesheet (14) and open on the opposite face of said tubesheet (14);
C. a second tubesheet (15) formed of a thermoset or thermoplastic polymeric material at the second end of the bundle opposite the first end, said hollow fiber membranes embedded in the second tubesheet (15), communicating through said second tubesheet (15), and open on the opposite face of said tubesheet (15);
D. a core (12), about which the hollow fiber membrane bundle (10)is formed, further arranged such that the core (12) extends through and is bonded to the first tubesheet (14) and the second tubesheet (15);
E. a tubesheet support cylinder which encircles the bundle wherein a first end is bonded to or embedded in the first tubesheet (14), and a second end is bonded to or embedded in the second tubesheet (15);
F. a feed inlet (21) for introducing a feed mixture of fluids to be separated into the bores of the hollow fiber membranes by contacting the feed mixture with the hollow fiber membranes at the opposite face of the first tubesheet;
G. a feed inlet space or region (19) adjacent to the opposite face of the first tubesheet (14) arranged to form a cavity into which the feed inlet means introduces the feed mixture, wherein the region is sealed such that fluid can only enter or leave the region through the feed inlet region or the hollow fibers and the feed inlet is arranged to introduce the feed fluid mixture into the bores of the hollow fiber membranes;
H. a non-permeate outlet (22) for removing the fluids which do not permeate through the hollow fiber membranes from the bore of the hollow fiber membranes at the opposite face of the second tubesheet;
I. a non-permeate outlet space or region adjacent to the opposite face of the second tubesheet (15) arranged to form a cavity into which the hollow fiber membranes introduce fluids which do not permeate the membrane, and from which the non-permeate outlet removes the non-permeating fluids from the module, wherein the non-permeate outlet region is sealed such that fluid can only enter or leave the region through the hollow fiber membranes or the non-permeate outlet means;
J. a casing (16) arranged to encase the entire hollow fiber membrane bundle and the two tubesheets;
K. an opening in the casing (16) and tubesheet support cylinder for removing the fluids which permeate through the hollow fiber membranes from the vicinity of the hollow fiber membranes;
L. seals, between the first tubesheet (14) and the casing (16) and between the second tubesheet (15) and the casing (16), such that fluid cannot communicate between the feed inlet or outlet regions and the region between the two tubesheets which is outside of the hollow fibers;
M. a first end cap (17) for sealing the end of the casing (16) near the first tubesheet (14), thereby enclosing the feed inlet space or region (19), said end cap (17) being physically fixed to said casing (16);
N. a second end cap (18) for sealing the end of the casing (16) near the second tubesheet (15) thereby enclosing the non-permeate outlet space or region (20), said end cap (18) being physically fixed to said casing (16);
characterized in that
(a) the seals, (mentioned under L.) are resin seals;
(b) feed inlet opening (21) and non-permeate outlet opening (22) are going through the resin seals and obtained by reboring said openings to a depth penetrating into the cavity regions (19) and (20).

14. A device according to Claim 13 being further characterized by means (11) for channeling flow of permeate in the longitudinal direction parallel to the core toward the permeate outlet, wherein said means (11) have one end embedded in the second tubesheet and the second end terminated at a short distance from the first tubesheet to allow the permeate to flow to the permeate outlet means.

15. A device according to Claim 14 wherein said means (11) for channeling flow comprises:
an exterior baffle (11) that encircles the exterior of the hollow fiber bundle (10), wherein the first end of said baffle (11) is attached to or embedded in the second tubesheet (15) and the opposite end of said baffle is located at a distance from the first tubesheet (14) that is sufficient to permit withdrawal of the permeate fluid; and
at least one interior baffle (11) in the interior of the hollow fiber bundle, wherein the first end of said interior baffle is located near the first tubesheet (14), at a distance therefrom that is sufficient to allow withdrawal of the permeate fluid from said module and the second end of said baffle is fixed to said second tubesheet (15).

16. The device of any of claims 13 to 15, further comprising: a perforated core (12) for introducing a sweep fluid into the permeate side of said hollow fiber membranes.

17. The device of claim 16 wherein said core (12) is perforated only near the second tubesheet (15), whereby flow of sweep fluid and permeate is parallel to said core, countercurrent to flow of bore-side fluid.

## Patentansprüche

1. Verfahren zum Einsiegeln eines Hohlfasermembrantrennmoduls in ein Gehäuse (16), bei welchem der Hohlfasermembrantrennmodul eine Vielzahl von Hohlfasern, die in einem einen Kern (12) umgebenden Bündel (10) angeordnet sind, und jedes Ende des Bündels umgebende Rohrplatten (14, 15), welche die Hohlfasern zusammenbinden, umfaßt, wobei das Verfahren gekennzeichnet, ist durch die Stufen:
A. Anordnen des Hohlfasertrennmoduls innerhalb eines Gehäuses (16), während sich das Gehäuse in einer praktisch senkrechten Stellung befindet;
B. Einführen eines Harzes durch eine Öffnung (21) am Boden in das erste Ende des Gehäuses in einer ausreichenden Menge zum im wesentlichen Auffüllen des Bereiches angrenzend an dieses Ende zwischen dem Inneren des Gehäuses (16) und erster Rohrplatte (14), während ein Raum oder Hohlraum (19), der über den offenen Enden dieser Hohlfasern bei dieser ersten Rohrplatte (14) liegt, beibehalten wird;
C. Aushärten des Harzes;
D. Umkehren der Stellung des Gehäuses;
E. Einführen eines Harzes durch eine Öffnung (22) in das zweite Ende des Gehäuses (16) in einer ausreichenden Menge zum Auffüllen des Bereiches angrenzend an dieses Ende zwischen dem Inneren des Gehäuses (16) und zweiter Rohrplatte (15), während ein Raum oder Hohlraum (20), der über den offenen Enden dieser Hohlfasern bei dieser zweiten Rohrplatte (15) liegt, beibehalten wird;
F. Aushärten des Harzes; und
G. erneutes Anbringen von Öffnungen (21, 22) an jedem Ende des Gehäuses (16) durch das ausgehärtete Harz, die in die Zwischenräume (19, 20), welche über den Enden der Hohlfasern liegen, eindringen, wodurch Strömungspfade zum Einführen und/oder Abziehen von Fluiden durch diesen Hohlfasermembrantrennmodul bereitgestellt werden.

2. Verfahren nach Anspruch 1, worin der Hohlfasertrennmodul umfaßt:
A. eine Vielzahl von Hohlfasermembranen, die in einem Bündel (10) angeordnet sind und zur Trennung von einem oder mehreren Fluid/en aus einer Fluideinspeisungsmischung ausgelegt sind;
B. eine erste Rohrplatte (14), gebildet aus einem hitzehärtbaren oder thermoplastischen polymeren Material, angeordnet an einem ersten Ende des Bündels (10), wobei diese in der ersten Rohrplatte eingebetteten Hohlfasermembrane durch die erste Rohrplatte kommunizieren und auf der gegenüberliegenden Fläche der ersten Rohrplatte offen sind;
C. eine zweite Rohrplatte (15), gebildet aus einem hitzehärtbaren oder thermoplastischen polymeren Material, angeordnet an dem zweiten Ende des Bündels (10) gegenüber dem ersten Ende des Bündels, wobei diese in der zweiten Rohrplatte eingebetteten Hohlfasermembrane durch die zweite Rohrplatte kommunizieren und auf der gegenüberliegenden Fläche der zweiten Rohrplatte offen sind;
D. einen Kern (12), um welchen das Hohlfasermembranbündel geformt ist, weiter so angeordnet, daß sich der Kern (12) hierdurch erstreckt und an der ersten Rohrplatte (14) und der zweiten Rohrplatte (15) befestigt ist; und
E. Einrichtungen (11) zum Kanalisieren von Fluid, das durch die Hohlfasermembrane zu dem Bereich zwischen den zwei Rohrplatten permeiert und außerhalb der Hohlfasermembrane ist, wobei diese Einrichtungen diesen Fluß in Längsrichtung parallel zu dem Kern kanalisieren, wobei diese Kanalisierungseinrichtungen ein Ende aufweisen, das in oder an der zweiten Rohrplatte (15) eingebettet oder befestigt ist, und das gegenüberliegende Ende in einem ausreichenden Abstand von der ersten Rohrplatte (14) angeordnet ist, um dieses Fluid aus diesem Modul abzuziehen.

3. Verfahren nach Anspruch 2, worin dieser Kern (12) perforiert ist, um ein Spülfluid in den Abschnitt des Moduls zwischen der ersten und zweiten Rohrplatte, der außerhalb der Hohlfasermembrane ist, einzuführen.

4. Verfahren nach Anspruch 2 oder 3, worin die Einrichtung zum Kanalisieren des Flusses umfaßt:
eine äußere Ablenkplatte (11), welche das Äußere des Hohlfaserbündels (10) einschließt, wobei das erste Ende dieser Ablenkplatte (11) in oder an der zweiten Rohrplatte (15) eingebettet oder befestigt ist, und das gegenüberliegende Ende dieser Ablenkplatte in einem ausreichenden Abstand von der ersten Rohrplatte (14) angeordnet ist, um das Abziehen des Permeat-Fluids zu erlauben; und
wenigstens eine innere Ablenkplatte (11) im Inneren des Hohlfaserbündels, wobei das erste Ende dieser inneren Ablenkplatte nahe der ersten Rohrplatte (14) in einem ausreichenden Abstand hiervon angeordnet ist, um das Abziehen des Permeat-Fluids aus diesem Modul zu erlauben, und das zweite Ende dieser Ablenkplatte an dieser zweiten Rohrplatte (15) befestigt ist.

5. Verfahren nach Anspruch 1, worin die Hohlfasermembrane einen dichten Diskrimierungsbereich aufweisen, der ein oder mehrere Fluid/e von einem oder mehreren anderen Fluid/en trennt.

6. Verfahren nach einem der Ansprüche 1 - 5, worin die Hohlfasermembrane wenigstens ein Polysulfon, Polyethersulfon, Polyimid, Polestercarbonat oder Polycarbonat umfassen.

7. Verfahren nach Anspruch 1, worin die Membrane mikroporös sind und wenigstens ein Polyolefin, fluoriertes Polyolefin, Polystyrol, Polyetherketon oder Polyetheretherketon umfassen.

8. Verfahren nach Anspruch 7, worin dieses Polyolefin Polyethylen, Polypropylen oder Poly-4-methylpenten ist.

9. Verfahren nach Anspruch 2, worin die Einrichtung zum Kanalisieren des Flusses undurchlässige Ablenkplatten umfassen, welche sich über 50 bis 95 % der Bündellänge zwischen den zwei Ablenkplatten erstrecken.

10. Verfahren nach Anspruch 1, worin das Hohlfasermembranbündel schrägschnittig gewickelt oder parallel gewickelt ist.

11. Verfahren nach Anspruch 1, worin dieses Harz zum Auffüllen der Bereiche zwischen dem Gehäuse und den Rohrplatten ein Epoxyharz oder ein Polyurethanharz umfaßt.

12. Verfahren nach Anspruch 2, worin der Kern (12) ausgelegt ist, Fluid, das nicht durch die Hohlfasermembrane in der Nachbarschaft der zweiten Rohrplatte permeiert, zu der Nachbarschaft der ersten Rohrplatte rückzuführen.

13. Fluidtrennvorrichtung, umfassend:
A. eine Vielzahl von Hohlfasermembranen, die in einem Bündel (10) angeordnet sind und zur Trennung von einem oder mehreren Fluid/en aus einer Fluideinspeisungsmischung ausgelegt sind;
B. eine erste Rohrplatte (14), gebildet aus einem hitzehärtbaren oder thermoplastischen polymeren Material an dem ersten Ende des Bündels, wobei diese in der ersten Rohrplatte eingebetteten Hohlfasermembrane durch diese Rohrplatte (14) kommunizieren und auf der gegenüberliegenden Fläche dieser Rohrplatte (14) offen sind;
C. eine zweite Rohrplatte (15), gebildet aus einem hitzehärtbaren oder thermoplastischen polymeren Material an dem zweiten Ende des Bündels gegenüber dem ersten Ende, wobei diese in der zweiten Rohrplatte (15) eingebetteten Hohlfasermembrane durch diese zweite Rohrplatte (15) kommunizieren und auf der gegenüberliegenden Fläche dieser Rohrplatte (15) offen sind;
D. einen Kern (12), um welchen das Hohlfasermembranbündel (10) geformt ist, weiter so angeordnet, daß sich der Kern (12) hierdurch erstreckt und an der ersten Rohrplatte (14) und der zweiten Rohrplatte (15) befestigt ist;
E. einen Rohrplatten-Tragzylinder, der das Bündel umgibt, worin ein erstes Ende an die erste Rohrplatte (14) gebunden oder hierin eingebettet ist und ein zweites Ende an der zweiten Rohrplatte (15) gebunden oder hierin eingebettet ist;
F. einen Einspeisungseinlaß (21) zum Einführen einer Einspeisungsmischung von zu trennenden Fluiden in die Bohrungen der Hohlfasermembrane durch Inkontaktbringen der Einspeisungsmischung mit den Hohlfasermembranen an der gegenüberliegenden Fläche der ersten Rohrplatte;
G. einen Einspeisungseinlaßraum oder -bereich (19) angrenzend an die gegenüberliegende Fläche der ersten Rohrplatte (14), ausgelegt zur Bildung eines Hohlraumes, in welchen die Einspeisungseinlaßeinrichtung die Einspeisungsmischung einführt, wobei der Bereich so abgedichtet ist, daß Fluid in den Bereich nur durch den Einspeisungseinlaßbereich oder die Hohlfasern eintreten oder den Bereich verlassen kann, und wobei der Einspeisungseinlaß so angeordnet ist, die Einspeisungsfluidmischung in die Bohrungen der Hohlfasermembrane einzuführen;
H. einen Nicht-Permeat-Auslaß (22) zur Entfernung der Fluide, welche nicht durch die Hohlfasermembrane aus der Bohrung der Hohlfasermembrane permeieren, an der gegenüberliegenden Fläche der zweiten Rohrplatte;
I. einen Nicht-Permeat-Auslaßraum oder -bereich angrenzend an die gegenüberliegende Fläche der zweiten Rohrplatte (15), ausgelegt zur Bildung eines Hohlraumes, in welchen die Hohlfasermembrane Fluide einführen, welche nicht durch die Membran permeieren, und aus welchem der Nicht-Permeat-Auslaß die nicht permeierten Fluide aus dem Modul entfernt, wobei der Nicht-Permeat-Auslaßbereich derart abgedichtet ist, daß Fluid in den Bereich nur durch die Hohlfasermembrane oder die Nicht-Permeat-Auslaßeinrichtung eintreten oder den Bereich verlassen kann;
J. ein Gehäuse (16), das zum Einfassen der gesamten Hohlfasermembranbündels und der zwei Rohrplatten ausgelegt ist;
K. eine Öffnung in dem Gehäuse (16) und Rohrplatten-Tragzylinder zur Entfernung der Fluide, welche durch die Hohlfasermembrane permeieren, aus der Nachbarschaft der Hohlfasermembrane;
L. Dichtungen zwischen der ersten Rohrplatte (14) und dem Gehäuse (16) und zwischen der zweiten Rohrplatte (15) und dem Gehäuse (16), so daß Fluid zwischen den Einspeisungseinlaß- oder Auslaßbereichen und dem Bereich zwischen den zwei Rohrplatten, der außerhalb der Hohlfasern ist, nicht kommunizieren kann;
M. eine erste Endkappe (17) zum Abdichten des Endes des Gehäuses (16) nahe bei der ersten Rohrplatte (14), wodurch der Einspeisungseinlaßraum oder -bereich (19) eingeschlossen wird, wobei diese Endkappe (17) mechanisch an diesem Gehäuse (16) befestigt ist;
N. eine zweite Endkappe (18) zum Abdichten des Endes des Gehäuses (16) nahe bei der zweiten Rohrplatte (15), wodurch der Nicht-Permeat-Auslaßraum oder -bereich (20) eingeschlossen wird, wobei diese Endkappe (18) mechanisch an diesem Gehäuse (16) befestigt ist;
dadurch gekennzeichnet, daß
(a) die Dichtungen (unter L. aufgeführt) Harzdichtungen sind;
(b) die Einspeisungseinlaßöffnung (21) und die Nicht-Permeat-Auslaßöffnung (22) durch die Harzdichtungen hindurchführen und durch Wiederaufbohren dieser Öffnungen bis zu einer in die Hohlraumbereiche (19) und (20) eindringenden Tiefe erhalten worden sind.

14. Vorrichtung nach Anspruch 13,, weiter gekennzeichnet durch Einrichtungen (11) zum Kanalisieren von Fluß von Permeat in der Längsrichtung parallel zu dem Kern zu dem Permeat-Auslaß hin, wobei diese Einrichtungen (11) ein Ende in der zweiten Rohrplatte eingebettet haben und das zweite Ende in einem kurzen Abstand von der ersten Rohrplatte endet, damit Permeat zu der Permeat-Auslaßeinrichtung fließen kann.

15. Vorrichtung nach Anspruch 14, worin diese Einrichtungen (11) zum Kanalisieren von Fluß umfaßt:
eine äußere Ablenkplatte (11), welche das Äußere des Hohlfaserbündels (10) umschließt, wobei das erste Ende dieser Ablenkplatte (11) an oder in der zweiten Rohrplatte (15) befestigt oder eingebettet ist und das gegenüberliegende Ende dieser Ablenkplatte in einem ausreichenden Abstand von der ersten Rohrplatte (14) angeordnet ist, um das Abziehen des Permeat-Fluids zu erlauben; und
wenigsten eine innere Ablenkplatte (11) im Inneren des Hohlfaserbündels, wobei das erste Ende dieser inneren Ablenkplatte nahe der ersten Rohrplatte (14) in einem ausreichenden Abstand hiervon angeordnet ist, um das Abziehen des Permeat-Fluids aus diesem Modul zu erlauben, und das zweite Ende dieser Ablenkplatte an dieser zweiten Rohrplatte (15) befestigt ist.

16. Vorrichtung nach einem der Ansprüche 13 bis 15, weiter umfassend:
einen perforierten Kern (12) zum Einführen eines Spülfluids in die Permeat-Seite dieser Hohlfasermembrane.

17. Vorrichtung nach Anspruch 16, worin dieser Kern (12) nur nahe bei der zweiten Rohrplatte (15) perforiert ist, wodurch Fluß von Spülfluid und Permeat parallel zu diesem Kern im Gegenstrom zu Fluß von kernseitigem Fluid ist.

## Revendications

1. Procédé d'assemblage étanche, dans une enveloppe (16), d'un module de séparation à membranes formées de fibres creuses dans lequel le module de séparation à membranes formées de fibres creuses comprend une série de fibres creuses agencées en un faisceau (10) qui entoure un noyau (12) et est pourvu de plaques à tubes (14, 15) qui entourent chaque extrémité du faisceau et relient entre elles les fibres creuses, le procédé étant caractérisé par les étapes consistant à:
A. Positionner le module de séparation à fibres creuses à l'intérieur d'une enveloppe (16), tandis que l'enveloppe est dans une position sensiblement verticale;
B. Introduire dans la première extrémité de l'enveloppe, à travers une ouverture (21) ménagée à la partie basse, une résine en quantité suffisante pour remplir sensiblement la région adjacente à ladite extrémité entre l'intérieur de l'enveloppe (16) et la première plaque à tubes (14) tout en maintenant un espace ou cavité (19) qui recouvre les extrémités ouvertes desdites fibres creuses à ladite première plaque à tubes (14);
C. Durcir la résine;
D. Inverser la position de l'enveloppe;
E. Introduire dans la deuxième extrémité de l'enveloppe (16) à travers une ouverture (22) une résine en quantité suffisante pour remplir la région adjacente à ladite extrémité entre l'intérieur de l'enveloppe et la deuxième plaque à tubes (15) tout en maintenant un espace ou cavité (20) qui recouvre les extrémités ouvertes desdites fibres creuses de ladite deuxième plaque à tubes (15);
F. Durcir la résine; et
G. Ménager de nouveau à chaque extrémité de l'enveloppe (16), à travers la résine durcie, des ouvertures (21, 22) qui pénètrent jusqu'aux espaces (19, 20) qui recouvrent les extrémités des fibres creuses, en formant ainsi des trajets d'écoulement pour introduire des fluides à travers ledit module de séparation à membranes en forme de fibres creuses et/ou en retirer des fluides.

2. Procédé selon la revendication 1, dans lequel le module de séparation à fibres creuses comprend:
A. Une série de membranes en forme de fibres creuses, agencées en un faisceau (10) et aptes à séparer un ou plusieurs fluides à partir d'un mélange de fluides d'alimentation;
B. Une première plaque à tubes (14) formée d'une matière polymère thermodurcissable ou thermoplastique située à une première extrémité du faisceau (10), lesdites membranes en forme de fibres creuses étant encastrées dans la première plaque à tubes, communiquant à travers la première plaque à tubes, et étant ouvertes sur la face opposée de la première plaque à tubes;
C. Une deuxième plaque à tubes (15) formée d'une matière polymère thermodurcissable ou thermoplastique située à la deuxième extrémité du faisceau (10), opposée à la première extrémité du faisceau, lesdites membranes en forme de fibres creuses étant encastrées dans la deuxième plaque à tubes, communiquant à travers la deuxième plaque à tubes, et étant ouvertes sur la face opposée de la deuxième plaque à tubes;
D. Un noyau (12) autour duquel est formé le faisceau de membranes en forme de fibres creuses, agencé en outre d'une manière telle que le noyau (12) traverse la première plaque à tubes (14) et la deuxième plaque à tubes (15) et leur est fixé; et
E. Un moyen (11) de canalisation de l'écoulement du fluide qui passe à travers les membranes en forme de fibres creuses vers la région située entre les deux plaques à tubes, et qui est à l'extérieur des membranes formées de fibres creuses, ledit moyen canalisant longitudinalement ledit écoulement parallèlement au noyau, une extrémité dudit moyen de canalisation étant encastrée dans la deuxième plaque à tubes (15) ou lui étant fixée et l'extrémité opposée étant située à une distance suffisante de la première plaque à tubes (14) pour retirer ledit fluide dudit module.

3. Procédé selon la revendication 2 dans lequel ledit noyau (12) est perforé de manière à introduire un fluide de nettoyage dans la partie du module située entre la première et la deuxième plaques à tubes, qui se trouve à l'extérieur des membranes en forme de fibres creuses.

4. Procédé selon la revendication 2 ou la revendication 3 dans lequel le moyen de canalisation de l'écoulement comprend:
une cloison extérieure (11) qui encercle l'extérieur du faisceau (10) de fibres creuses, la première extrémité de ladite cloison (11) étant fixée à la deuxième plaque à tubes (15) ou y étant encastrée et l'extrémité opposée de ladite cloison étant située à une distance de la première plaque à tubes (14) qui est suffisante pour permettre de retirer le fluide de perméat; et
au moins une cloison intérieure (11) située à l'intérieur du faisceau de fibres creuses, la première extrémité de ladite cloison intérieure étant positionnée près de la première plaque à tubes (14), à une distance de celle-ci qui est suffisante pour permettre de retirer dudit module le fluide de perméat et la deuxième extrémité de ladite cloison étant fixée à ladite deuxième plaque à tubes (15).

5. Procédé selon la revendication 1, dans lequel les membranes en forme de fibres creuses comprennent une région discriminante dense qui sépare un ou plusieurs fluides d'un ou plusieurs autres fluides.

6. Procédé selon l'une quelconque des revendications 1 à 5 dans lequel les membranes en forme de fibres creuses comprennent au moins un élément choisi parmi un polysulfone, un polyéthersulfone, un polyimide, un polyestercarbonate ou un polycarbonate.

7. Procédé selon la revendication 1, dans lequel les membranes sont microporeuses et comprennent au moins un élément choisi parmi une polyoléfine, une polyoléfine fluorée, un polystyrène, une polyéthercétone ou une polyétheréthercétone.

8. Procédé selon la revendication 7 dans lequel ladite polyoléfine est le polyéthylène, le polypropylène ou le poly-4-méthylpentène.

9. Procédé selon la revendication 2, dans lequel les moyens de canalisation des écoulements comprennent des cloisons intermédiaires qui s'étendent entre les deux plaques à tubes sur 50 à 95 pour cent de la longueur du faisceau.

10. Procédé selon la revendication 1 dans lequel le faisceau de membranes en forme de fibres creuses est en disposition parallèle ou inclinée.

11. Procédé selon la revendication 1 dans lequel ladite résine de remplissage des régions situées entre l'enveloppe et les plaques à tubes comprend une résine époxy ou une résine polyuréthanne.

12. Procédé selon la revendication 2 dans lequel le noyau (12) est apte à renvoyer vers le voisinage de la première plaque à tubes un fluide, situé au voisinage de la deuxième plaque à tubes, qui ne passe pas à travers les membranes en forme de fibres creuses.

13. Dispositif de séparation de fluides, comprenant:
A. Une série de membranes en forme de fibres creuses, agencées en un faisceau (10) et aptes à séparer un ou plusieurs fluides à partir d'un mélange de fluides d'alimentation;
B. Une première plaque à tubes (14) formée d'une matière polymère thermodurcissable ou thermoplastique située à la première extrémité du faisceau (10), lesdites membranes en forme de fibres creuses étant encastrées dans la première plaque à tubes, communiquant à travers ladite plaque à tubes (14), et étant ouvertes sur la face opposée de ladite plaque à tubes (14);
C. Une deuxième plaque à tubes (15) formée d'une matière polymère thermodurcissable ou thermoplastique située à la deuxième extrémité du faisceau (10), opposée à la première extrémité du faisceau, lesdites membranes en forme de fibres creuses étant encastrées dans la deuxième plaque à tubes (15), communiquant à travers ladite deuxième plaque à tubes (15), et étant ouvertes sur la face opposée de ladite plaque à tubes (15);
D. Un noyau (12) autour duquel est formé le faisceau (10) de membranes en forme de fibres creuses, agencé en outre d'une manière telle que le noyau (12) traverse la première plaque à tubes (14) et la deuxième plaque à tubes (15) et leur est fixé;
E. Un cylindre de support de plaques à tubes qui encercle le faisceau, une première extrémité étant fixée à la première plaque à tubes (14) ou y étant encastrée, et une deuxième extrémité étant fixée à la deuxième plaque à tubes (15) ou y étant encastrée.
F. Une entrée (21) d'alimentation pour introduire, dans les âmes des membranes en forme de fibres creuses, un mélange d'alimentation de fluides à séparer, en mettant en contact le mélange d'alimentation avec les membranes en forme de fibres creuses à la face opposée de la première plaque à tubes;
G. Un espace ou région (19) d'entrée d'alimentation adjacent à la face opposée de la première plaque à tubes (14) agencé de façon à former une cavité dans laquelle le moyen d'entrée d'alimentation introduit le mélange d'alimentation, la région étant fermée de façon étanche de sorte qu'un fluide ne peut entrer dans la région ou la quitter qu'à travers la région d'entrée d'alimentation ou à travers les fibres creuses et l'entrée d'alimentation étant agencée pour introduire le mélange de fluides d'alimentation dans les âmes des membranes en forme de fibres creuses;
H. Une sortie (22) de non-perméat située à la face opposée de la deuxième plaque à tubes pour enlever de l'âme des membranes en forme de fibres creuses les fluides qui ne passent pas à travers les membranes en forme de fibres creuses;
I. Un espace ou région de sortie de non-perméat adjacent à la face opposée de la deuxième plaque à tubes (15) agencé de manière à former une cavité dans laquelle les membranes en forme de fibres creuses introduisent des fluides qui ne passent pas à travers la membrane, et à partir de laquelle la sortie de non-perméat enlève du module les fluides qui ne traversent pas, la région de sortie du non-perméat étant fermée de façon étanche d'une manière telle que les fluides ne peuvent entrer dans la région ou la quitter qu'à travers les membranes en forme de fibres creuses ou le moyen de sortie de non-perméat;
J. Une enveloppe (16) agencée pour envelopper tout le faisceau de membranes en forme de fibres creuses et les deux plaques à tubes;
K. Une ouverture ménagée dans l'enveloppe (16) et le cylindre de support des plaques à tubes pour enlever du voisinage des membranes en forme de fibres creuses les fluides qui passent à travers les membranes en forme de fibres creuses;
L. Des joints étanches, disposés entre la première plaque à tubes (14) et l'enveloppe (16) et entre la deuxième plaque à tubes (15) et l'enveloppe (16) de façon à éviter toute communication de fluide entre les régions d'entrée d'alimentation ou de sortie et la région située entre les deux plaques à tubes qui est à l'extérieur des fibres creuses;
M. Une première calotte d'extrémité (17) pour fermer de façon étanche l'extrémité de l'enveloppe (16) près de la première plaque à tubes (14), en enfermant ainsi l'espace ou région (19) d'entrée d'alimentation, ladite calotte d'extrémité (17) étant physiquement fixée à ladite enveloppe (16).
N. Une deuxième calotte d'extrémité (18) pour fermer de façon étanche l'extrémité de l'enveloppe (16) près de la deuxième plaque à tubes (14), en enfermant ainsi l'espace ou région (19) de sortie de non-perméat, ladite calotte d'extrémité (18) étant physiquement fixée à ladite enveloppe (16);
caractérisé en ce que
a. Les joints étanches (mentionnés sous L) sont des joints étanches en résine;
b. l'ouverture d'entrée (21) d'alimentation et l'ouverture de sortie (22) de non-perméat traversent les joints en résine et sont réalisées en perçant de nouveau lesdites ouvertures jusqu'à une profondeur qui permet de pénétrer dans les régions de cavité (19) et (20).

14. Dispositif selon la revendication 13, caractérisé en outre par un moyen (11) de canalisation de l'écoulement du perméat dans la direction longitudinale parallèle au noyau vers la sortie de perméat, la première extrémité dudit moyen (11) étant encastrée dans la deuxième plaque à tubes et la deuxième extrémité se terminant à une courte distance de la première plaque à tubes pour permettre au perméat de s'écouler vers le moyen de sortie du perméat.

15. Dispositif selon la revendication 14 dans lequel ledit moyen (11) de canalisation d'écoulement comprend:
une cloison extérieure (11) qui encercle l'extérieur du faisceau (10) de fibres creuses, la première extrémité de ladite cloison (11) étant fixée à la deuxième plaque à tubes (15) ou y étant encastrée et l'extrémité opposée de ladite cloison étant située à une distance de la première plaque à tubes (14) qui est suffisante pour permettre de retirer le fluide de perméat; et
au moins une cloison intérieure (11) située à l'intérieur du faisceau de fibres creuses, la première extrémité de ladite cloison intérieure étant positionnée près de la première plaque à tubes (14), à une distance de celle-ci qui est suffisante pour permettre de retirer dudit module le fluide de perméat et la deuxième extrémité de ladite cloison étant fixée à ladite deuxième plaque à tubes (15).

16. Dispositif selon l'une quelconque des revendications 13 à 15 comprenant en outre:
un noyau perforé (12) pour introduire un fluide de nettoyage dans le côté de perméat desdites membranes en forme de fibres creuses.

17. Dispositif selon la revendication 16, dans lequel ledit noyau (12) n'est perforé que près de la deuxième plaque à tubes (15), grâce à quoi l'écoulement du fluide de nettoyage et du perméat est parallèle audit noyau, à contre-courant de l'écoulement du fluide sur le côté tubes.
